# EUROPEAN PATENT APPLICATION

(11) **EP 4 664 668 A1**
(43) Date of publication of application: **17.12.2025**
(21) Application number: 24869649.4
(22) Date of filing: 02.04.2024
(51) Int. Cl.: H01M 50/593

(54) **BATTERY CELL, BATTERY, AND ELECTRICAL DEVICE**

(30) Priority: 27.09.2023 CN 202311264196
(71) Applicant: Contemporary Amperex Technology Co., Limited, Ningde, Fujian 352100 (CN)
(72) Inventor: WU, Kai, Ningde, Fujian 352100 (CN); PENG, Longqing, Ningde, Fujian 352100 (CN); LI, Jingli, Ningde, Fujian 352100 (CN); WANG, Rongsheng, Ningde, Fujian 352100 (CN); JI, Xing, Ningde, Fujian 352100 (CN); LI, Ting, Ningde, Fujian 352100 (CN)
(74) Representative: Ziebig Hengelhaupt Intellectual Property Attorneys Patentanwaltskanzlei PartGmbB
(86) International application number: PCT/CN2024/085670
(87) International publication number: WO 2025/066080

(57) **Abstract**

The present application provides a battery cell (20), a battery (100), and an electrical device, where the battery cell (20) includes a case (22) and an insulating protective layer (24), the insulating protective layer (24) being disposed on an inner wall of the case (22). In the battery cell (20) provided in the embodiments of the present application, the insulating protective layer (24) is disposed on the inner wall of the case of the battery cell (20), where the insulating protective layer (24) can separate the case (22) from the electrolyte solution inside the case (22), so as to reduce the probability of contact between the case (22) and the electrolyte solution, thereby lowering the probability of corrosion breakdown of the case (22).

## Description

The present application claims priority to Chinese Patent Application No. 202311264196.0 titled "BATTERY CELL, BATTERY, AND ELECTRICAL DEVICE" filed on September 27, 2023, the entire contents of which are incorporated herein by reference.

### TECHNICAL FIELD

The present application relates to the technical field of battery structures, and particularly provides a battery cell, a battery, and an electrical device.

### BACKGROUND

With the development of electronic and intelligent devices, there is an increasingly urgent demand for secondary energy storage batteries, particularly for high-energy-density lithium-ion batteries. In the related art, since there exists free electrolyte solution between the case of a battery cell and the bare battery cell, high voltages may be formed between the positive/negative terminal posts of the electrode assembly and the case of the battery cell. This may lead to oxidation of the electrolyte solution, causing corrosion breakdown of the case, which consequently poses a risk of combustion and explosion in the battery.

### SUMMARY

The objective of the embodiments of the present application is to provide a battery cell, a battery, and an electrical device, which are intended to resolve the problem of corrosion breakdown susceptibility of the case of a battery cell due to contact with electrolyte solution.

To achieve the aforementioned objective, the technical solutions adopted in the embodiments of the present application are as follows:
In a first aspect, an embodiment of the present application provides a battery cell including a case and an insulating protective layer, the insulating protective layer being disposed on an inner wall of the case.

Beneficial effects of the embodiment of the present application: In the battery cell provided in the embodiments of the present application, the insulating protective layer is disposed on the inner wall of the case of the battery cell, where the insulating protective layer can separate the case from the electrolyte solution inside the case, so as to reduce the probability of contact between the case and the electrolyte solution, thereby lowering the probability of corrosion breakdown of the case.

In some embodiments, the case is provided with an opening, and the battery cell further includes an end cover, the end cover being disposed to cover the opening, where an exposed gap is provided between the insulating protective layer and the end cover.

By adopting the aforementioned technical solution, the end cover can be disposed to cover the opening of the case to form sealing, and the exposed gap is provided between the insulating protective layer and the end cover to facilitate avoidance of welding between the end cover and the case.

In some embodiments, the battery cell further includes a lower plastic layer, the lower plastic layer being disposed on an inner wall of the end cover, where the lower plastic layer is configured to cover at least a portion of the exposed gap.

By adopting the aforementioned technical solution, the insulating protection capability of the end cover is enhanced by arranging the lower plastic layer on the inner wall of the end cover. Additionally, the lower plastic layer can cover at least a portion of the exposed gap, thereby improving protection for the exposed portion of the case at the exposed gap, further reducing the probability of contact between the case and the electrolyte solution, and consequently further reducing the probability of corrosion breakdown of the case, as well as lowering the risk of short circuits caused by contact between the exposed portion of the case at the exposed gap and the electrode assembly.

In some embodiments, the battery cell has a height direction, the end cover being disposed at a top portion of the case along the height direction, where in any plane parallel to the height direction, an orthographic projection of the lower plastic layer and an orthographic projection of the insulating protective layer at least partially overlap.

By adopting the aforementioned technical solution, the orthographic projection of the lower plastic layer and the orthographic projection of the insulating protective layer partially overlap in any plane parallel to the height direction, meaning that the combination of the lower plastic layer and the insulating protective layer can completely cover the inner wall of the case, which effectively separates the inner wall of the case from the electrolyte solution inside, thereby reducing the probability of contact between the case and the electrolyte solution, and consequently lowering the probability of corrosion breakdown of the case.

In some embodiments, in any plane parallel to the height direction, a height of an overlapping portion between the orthographic projection of the lower plastic layer and the orthographic projection of the insulating protective layer is Y, where 0 < Y ≤ 10 mm.

By adopting the aforementioned technical solution, the overlapping height Y between the orthographic projection of the lower plastic layer and the orthographic projection of the insulating protective layer is set to be greater than 0 mm and less than or equal to 10 mm, which can enable partial overlapping arrangement of the lower plastic layer and the insulating protective layer so as to cover the inner wall of the case, and to separate the inner wall of the case from the electrolyte solution inside, thereby reducing the probability of contact between the case and the electrolyte solution, and consequently lowering the probability of corrosion breakdown of the case, while also reducing the risk of short circuits caused by contact between the inner wall of the case and the electrode assembly.

In some embodiments, a height of an overlapping portion between the orthographic projection of the lower plastic layer and the orthographic projection of the insulating protective layer is Y, where 1 mm ≤ Y ≤ 5 mm.

By adopting the aforementioned technical solution, the overlapping height Y between the orthographic projection of the lower plastic layer and the orthographic projection of the insulating protective layer is set to be greater than or equal to 1 mm and less than or equal to 5 mm, which can enable partial overlapping arrangement of the lower plastic layer and the insulating protective layer so as to cover the inner wall of the case, and to separate the inner wall of the case from the electrolyte solution inside, thereby reducing the probability of contact between the case and the electrolyte solution, and consequently lowering the probability of corrosion breakdown of the case.

In some embodiments, a height of the exposed gap is X, where 2 mm ≤ X ≤ 10 mm.

By adopting the aforementioned technical solution, the height of the exposed gap is set to be greater than or equal to 2 mm and less than or equal to 10 mm, which can enable normal welding fixation of the end cover to the opening of the case within the height range of the exposed gap, thereby reducing influence of the insulating protective layer on assembly of the end cover.

In some embodiments, the height of the exposed gap is X, where 3 mm ≤ X ≤ 5 mm.

By adopting the aforementioned technical solution, the height of the exposed gap is set to be greater than or equal to 3 mm and less than or equal to 5 mm, which can enable normal welding fixation of the end cover to the opening of the case within the height range of the exposed gap, thereby reducing influence of the insulating protective layer on assembly of the end cover.

In some embodiments, the insulating protective layer includes at least one of phenolic resin, polyimide, polybenzimidazole, and polyetheretherketone.

By adopting the aforementioned technical solution, the insulating protective layer may include at least one of phenolic resin, polyimide, polybenzimidazole, and polyetheretherketone, and the first insulating protective layer formed using the aforementioned materials exhibits relatively good insulating protection performance.

In some embodiments, a thickness of the insulating protective layer is N, where 1 µm ≤ N ≤ 1000 µm.

By adopting the aforementioned technical solution, the thickness of the insulating protective layer is set to be greater than or equal to 1 µm and less than 1000 µm, thereby enabling the insulating protective layer to have a certain thickness and to function to separate the case from the electrolyte solution, such that the insulating protective layer can reduce the probability of contact between the electrolyte solution and the electrolyte solution, so as to lower the probability of corrosion breakdown of the case.

In some embodiments, the thickness of the insulating protective layer is N, where 50 µm ≤ N ≤ 500 µm.

By adopting the aforementioned technical solution, the thickness of the insulating protective layer is set to be greater than or equal to 50 µm and less than 500 µm, thereby enabling the insulating protective layer to have a certain thickness and to function to separate the case from the electrolyte solution, such that the insulating protective layer can reduce the probability of contact between the electrolyte solution and the electrolyte solution, so as to lower the probability of corrosion breakdown of the case.

In some embodiments, the battery cell further includes an electrode assembly, the electrode assembly being accommodated inside the case.

By adopting the aforementioned technical solution, the electrode assembly is directly accommodated inside the case, and an insulating protective layer disposed on the inner wall of the case is used to achieve insulating protection, thus eliminating the insulating structure on the surface of the electrode assembly, thereby achieving the purpose of cost reduction.

In a second aspect, an embodiment of the present application further provides a battery, including the aforementioned battery or the aforementioned battery cell.

Beneficial effects of the embodiment of the present application: The battery provided in the embodiment of the present application includes the aforementioned battery cell. On the basis of a relatively low probability of corrosion breakdown of the case of the battery cell, the probability of combustion or explosion of the battery can be effectively reduced.

In a third aspect, embodiments of the present application further provide an electrical device, including the aforementioned battery.

Beneficial effects of the embodiment of the present application: The electrical device provided in the embodiment of the present application includes the aforementioned battery. On the basis of a relatively low probability of combustion or explosion of the battery, the probability of combustion or explosion of the electrical device is also relatively low.

### DESCRIPTION OF DRAWINGS

To more clearly illustrate the technical solutions in the embodiments of the present application, the drawings required for describing the embodiments or related technologies will be briefly introduced below. It is apparent that the drawings in the following description are only some embodiments of the present application. For those of ordinary skill in the art, other drawings may be obtained from these drawings without creative efforts.
FIG. 1 is a schematic structural diagram of a vehicle provided in some embodiments of the present application;
FIG. 2 is an exploded view of a battery provided in some embodiments of the present application;
FIG. 3 is an exploded schematic structural diagram of a battery cell provided in some embodiments of the present application;
FIG. 4 is a schematic diagram of the internal structure of a battery cell provided in embodiments of the present application; and
FIG. 5 is a partial enlarged schematic view at position A in FIG. 4.

Here, the reference numerals in the drawings are as follows:
vehicle 1000;
battery 100, controller 200, motor 300;
box body 10, first portion 11, second portion 12;
battery cell 20, end cover 21, electrode terminal 21a, case 22, opening 221, electrode assembly 23, tab 23a; insulating protective layer 24, exposed gap 25, lower plastic layer 26; and
height direction H.

### DETAILED DESCRIPTION

The embodiments of the present application are described in detail below. Examples of the embodiments are illustrated in the accompanying drawings, where the same or similar labels from beginning to end denote the same or similar components or components having the same or similar functions. The embodiments described below with reference to the accompanying drawings are exemplary and are intended to explain the present application, but should not be construed as limiting the present application.

In the descriptions of the present application, it should be understood that orientations or positional relationships indicated by "length", "width", "upper", "lower", "front", "rear", "left", "right", "vertical", "horizontal", "top", "bottom", "inner", "outer", and the like are orientations or positional relationships as shown in the drawings, and are only for the purpose of facilitating and simplifying the descriptions of the present application instead of indicating or implying that devices or elements indicated must have particular orientations, and be constructed and operated in the particular orientations, so that these terms are not construed as limiting The present application.

In addition, the terms "first" and "second" are used for descriptive purposes only, and cannot be construed as indicating or implying relative importance or implicitly indicating the number of technical features indicated. From this, features defined as "first" and "second" may explicitly or implicitly include one or more features. In the description of the present application, "plurality" means two or more, unless otherwise expressly and specifically defined.

In the present application, unless otherwise expressly specified and limited, the terms "mount," "connected," "connect" and "fix" should be broadly understood, for example, they may be a fixed connection or a detachable connection or be integrated; or may be a mechanical connection or an electrical connection; or may be a direct connection or an indirect connection through an intermediate medium, or may be a communication between the interior of two elements or the interaction of two elements. For those of ordinary skill in the art, the specific meanings of the above terms in the present application can be understood according to specific situations.

At present, from the perspective of the development of the market situation, power batteries are increasingly more widely used. Power batteries are not only applied in energy storage power source systems such as water, fire, wind and solar power stations, but also widely applied in electric transport tools, such as electric bicycles, electric motorcycles, and electric vehicles, as well as many fields, such as military equipment and aerospace. With the continuous expansion of the application field of power batteries, the market demand is also constantly expanding.

Battery cells are generally used by forming battery modules or batteries through series or parallel connections; during operation of the battery or battery module, situations may occur where a battery cell experiences fusing. In such cases, high voltage may be formed between the electrode assembly and the case of this battery cell. Meanwhile, since electrolyte solution exists between the case of the battery cell and the bare battery cell inside the case, the electrolyte solution may undergo oxidation under high voltage conditions, leading to risks of corrosion breakdown of the case, and consequently posing a risk of combustion and explosion in the battery.

Based on the above considerations, to solve the problem of corrosion breakdown susceptibility of the case of a battery cell due to contact with electrolyte solution during battery usage, a battery cell has been designed, where an insulating protective layer is disposed on the inner wall of the case of the battery cell. The insulating protective layer can separate at least a portion of the inner wall of the case from the electrolyte solution, so as to reduce the probability of contact between the electrolyte solution and the case, thereby effectively lowering the probability of corrosion breakdown of the case.

In such a battery cell, since the insulating protective layer is disposed on the inner wall of the case, leading to a relatively low probability of direct contact between the electrolyte solution and the case, the probability of corrosion breakdown of the case by the electrolyte solution is also relatively low. Simultaneously, even if the battery cell undergoes fusing, posing a high-voltage environment between the positive/negative terminal posts of the electrode assembly and the case of the battery cell, the arrangement of the insulating protective layer on the inner wall of the case can effectively enhance the insulation performance of the case, thereby increasing the creepage distance between the bare battery cell inside the case and the case, thus reducing the probability of high-voltage breakdown of the case.

The battery cell disclosed in the embodiments of the present application can be used in an electrical apparatus that uses a battery as the power source or in various energy storage systems that use batteries as energy storage elements. The electrical apparatus may be, but is not limited to, a mobile phone, a tablet, a laptop, an electric toy, an electric tool, a battery vehicle, an electric vehicle, a ship, a spacecraft, and the like. Among them, the electric toy may include a stationary or mobile electric toy, for example, a game console, an electric car toy, an electric ship toy, and an electric aircraft toy, and the like, and the spacecraft may include an aircraft, a rocket, a space shuttle and a spaceship, and the like.

For the convenience of description in the following embodiments, an electrical apparatus being a vehicle 1000 according to an embodiment of the present application is taken as an example for the description.

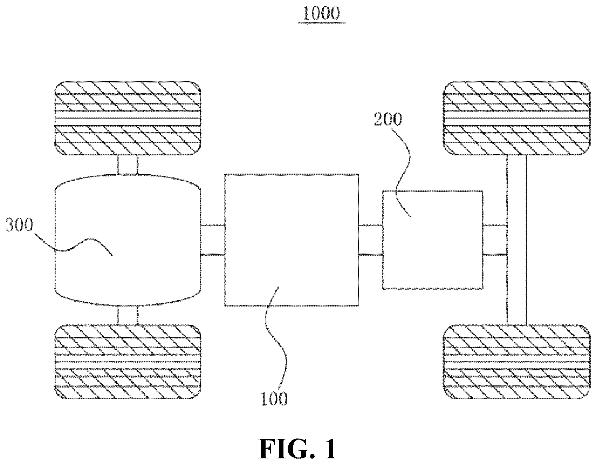

Referring to FIG. 1, FIG. 1 is a schematic structural diagram of a vehicle 1000 provided in some embodiments of the present application. The vehicle 1000 may be a fuel vehicle, a gas vehicle or a new energy vehicle. The new energy vehicle may be an all-electric vehicle, a hybrid vehicle, an extended-range vehicle, or the like. A battery 100 is arranged in the vehicle 1000. The battery 100 may be arranged at the bottom, or head, or tail of the vehicle 1000. The battery 100 may be used as a power supply for the vehicle 1000, for example, the battery 100 may be used as an operating power source for the vehicle 1000. The vehicle 1000 may further include a controller 200 and a motor 300. The controller 200 is configured to control the battery 100 to supply power to the motor 300, for example, to supply power for starting, navigation and driving of the vehicle 1000.

In some embodiments of the present application, the battery 100 not only may serve as an operating power source of the vehicle 1000, but also may serve as a driving power source of the vehicle 1000, thus replacing or partially replacing fuel or natural gas to provide driving power for the vehicle 1000.

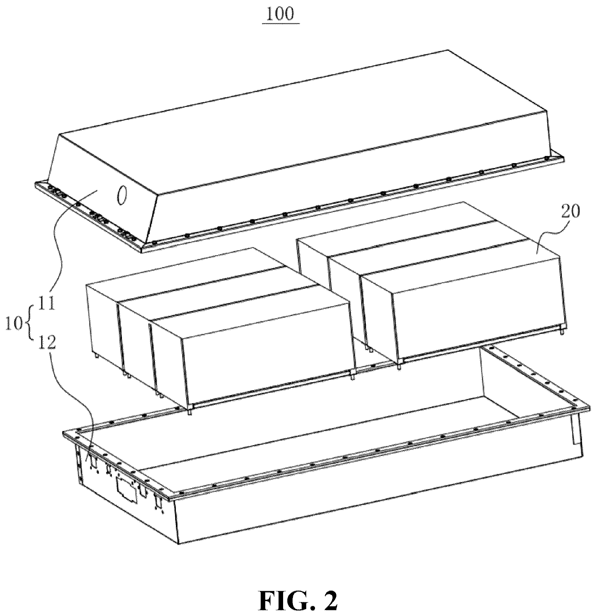

Referring to FIG. 2, FIG. 2 is an exploded view of a battery 100 provided in some embodiments of the present application. The battery 100 includes a box body 10 and a battery cell 20, where the battery cell 20 is accommodated within the box body 10. The box body 10 is used to provide an accommodating space for the battery cell 20, and the box body 10 can be of various structures. In some embodiments, the box body 10 may include a first portion 11 and a second portion 12, the first portion 11 and the second portion 12 covering each other, and the first portion 11 and the second portion 12 together defining the accommodating space for accommodating the battery cell 20. The second portion 12 may be of a hollow structure with an opening at one end, and the first portion 11 may be of a plate-like structure, where the first portion 11 covers the opening side of the second portion 12 so that the first portion 11 and the second portion 12 together define the accommodation space. The first portion 11 and the second portion 12 may each be of a hollow structure with an opening at one end, where the opening side of the first portion 11 covers the opening side of the second portion 12. Of course, the box body 10 formed by the first portion 11 and the second portion 12 may be of a variety of shapes, such as a cylinder and a rectangular solid.

In the battery 100, there may be a plurality of battery cells 20, and the plurality of battery cells 20 may be connected in series or in parallel or in parallel-series, where the parallel-series connection means that the plurality of battery cells 20 are connected in both series and parallel. The plurality of battery cells 20 may be directly connected together in series or in parallel or in parallel-series, and then the whole composed of the plurality of battery cells 20 may be accommodated in the box body 10. Of course, the battery 100 may also be in the form of a battery module first formed by the plurality of battery cells 20 being connected in series or in parallel or in parallel-series, then the plurality of battery modules may be connected in series or in parallel or in parallel-series to form a whole, and accommodated in the box body 10. The battery 100 may further include other structures, for example, the battery 100 may further include a bus component configured to realize electrical connections between the plurality of battery cells 20.

Each battery cell 20 may be a secondary battery or a primary battery; or it may be a lithium-sulfur battery, a sodium-ion battery or a magnesium-ion battery, but is not limited thereto. The battery cell 20 may be in the shape of a cylinder, a flat body, a cuboid or others.

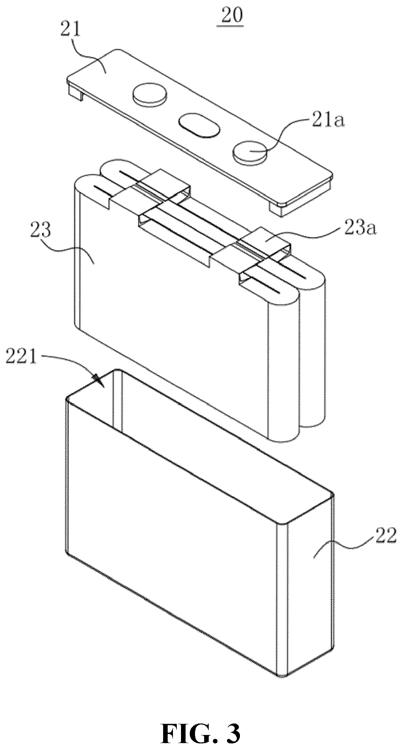

Referring to FIG. 3, and FIG. 3 is a schematic exploded structural diagram of a battery cell 20 provided in some embodiments of the present application. The battery cell 20 refers to a smallest unit constituting a battery. As shown in FIG. 3, the battery cell 20 includes an end cover 21, a case 22, an electrode assembly 23, and other functional components.

The end cover 21 refers to a component that covers an opening of the case 22 to isolate an internal environment of the battery cell 20 from an external environment. Without limitation, the shape of the end cover 21 may be adapted to the shape of the case 22 to fit the case 22. Optionally, the end cover 21 may be made of a material (such as an aluminum alloy) with a certain hardness and strength, so that the end cover 21 is not likely to be deformed when being pressed and collided, the battery cell 20 can have a higher structural strength, and the reliability can also be improved. Functional components such as an electrode terminal 21a may be provided on the end cover 21. The electrode terminal 21a may be configured to electrically connect with the electrode assembly 23 for outputting or inputting electrical energy of the battery cell 20, where the electrode terminal 21a includes a positive terminal post, a negative terminal post, an upper plastic, etc. One end of the positive terminal post and one end of the negative terminal post may be directly connected to a busbar, while the other end of the positive terminal post and the other end of the negative terminal post may be connected to one of the poles of the adjacent battery cell 20 in the battery 100 or the battery module. In some embodiments, the end cover 21 may be further provided with a pressure relief mechanism for relieving internal pressure when the internal pressure or temperature of the battery cell 20 reaches a threshold. The end cover 21 may also be made of a variety of materials. The material of the end cover 21 may be, but not limited to, copper, iron, aluminum, stainless steel, aluminum alloy, plastic, etc.

The case 22 is an assembly configured to match the end cover 21 to form the internal environment of the battery cell 20. The formed internal environment may be configured to accommodate the electrode assembly 23, an electrolytic solution, and other components. The shell 22 and the end cover 21 may be separate components, an opening may be formed in the shell 22, and at the opening, the opening is covered with the end cover 21 so as to form the internal environment of the battery cell 20. Without limitation, the end cover 21 and the case 22 may also be integrated. Specifically, the end cover 21 and the case 22 may form a common connection surface before other components enter the case. When an interior of the case 22 is required to be encapsulated, the end cover 21 is enabled to cover the case 22. The case 22 may be in various shapes and sizes, such as a cuboid, a cylinder, or a hexagonal prism. Specifically, the shape of the case 22 may be determined according to the specific shape and size of the electrode assembly 23. The case 22 may be made of various materials, such as copper, iron, aluminum, stainless steel, and aluminum alloy, which is not particularly limited in the embodiments of the present application.

The electrode assembly 23 is a component in the battery cell 100 where an electrochemical reaction occurs. One or more electrode assemblies 23 may be included within the shell 22. The electrode assembly 23 is mainly formed by winding or laminating a positive electrode plate and a negative electrode plate, and a separator is usually arranged between the positive electrode plate and the negative electrode plate. The portions of the positive electrode plate and the negative electrode plate having active materials constitute a main body portion of the electrode assembly 23, and the portions of the positive electrode plate and the negative electrode plate having no active materials respectively constitute tabs 23a. The positive electrode tab and the negative electrode tab may be co-located at one end of the main body portion or located at two ends of the main body portion, respectively. In the charging and discharging process of the battery, the positive electrode active material and the negative electrode active material react with electrolyte solution, and the tabs 23a are connected to the electrode terminals to form a current loop.

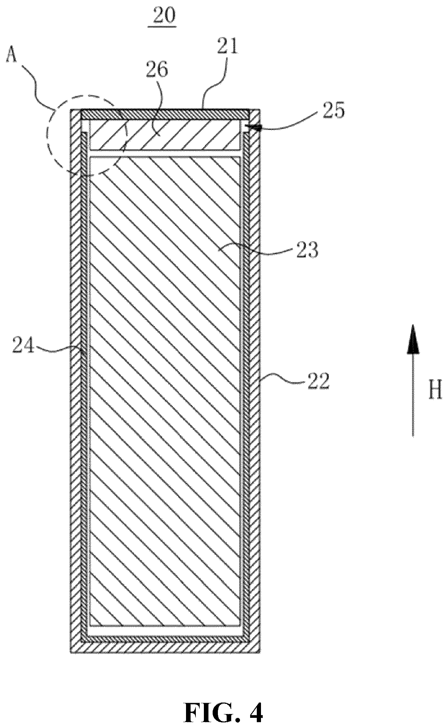

According to some embodiments of the present application, referring to FIGS. 3 and 4, an embodiment of the present application provides a battery cell 20, including a case 22 and an insulating protective layer 24, the insulating protective layer 24 being disposed on an inner wall of the case 22.

It can be understood that the case 22 may be used to accommodate an electrode assembly 23, electrolyte solution, and other components.

The inner wall of the case 22 refers to a wall surface on the side of the case 22 used to accommodate the electrode assembly 23, electrolyte solution, and other components (generally the inner side).

The insulating protective layer 24 is a layered structure with insulating properties. The insulating protective layer 24 may be, but is not limited to, an insulating coating, insulating film, insulating adhesive layer, etc., fixed to the inner wall of the case 22 through coating, bonding, or other methods.

Specifically, the insulating protective layer 24 may completely cover the inner wall of the case 22 to facilitate complete separation of the case 22 from the electrolyte solution accommodated inside the case 22. Alternatively, the insulating protective layer 24 may only cover a portion of the inner wall of the case 22. For example, the insulating protective layer 24 leaves an exposed portion at the edge of the inner wall of the case 22, meaning that the insulating protective layer 24 does not cover the edge of the inner wall of the case 22, exposing the edge of the inner wall of the case 22, thereby facilitating connection operations between the case 22 and external devices.

In the battery cell 20 provided in the embodiment of the present application, the insulating protective layer 24 is disposed on the inner wall of the case 22 of the battery cell 20. The insulating protective layer 24 can separate the case 22 from the electrolyte solution inside the case 22, so as to reduce the probability of contact between the case 22 and the electrolyte solution, thereby lowering the probability of corrosion breakdown of the case 22. Simultaneously, when battery cells 20 are combined to form a battery or battery module for use, even if a battery cell 20 experiences fusing, resulting in a high-voltage environment being formed between the positive and negative terminal posts and the case 22 of the battery cell 20, the arrangement of the insulating protective layer 24 on the inner wall of the case 22 improves the insulating protection performance of the case 22. Consequently, the creepage distance between the case 22 and the electrode assembly 23 accommodated inside the case 22 is effectively increased, thereby significantly reducing the risk of high-voltage breakdown of the case 22.

According to some embodiments of the present application, continuing to refer to FIGS. 3 to 5, the case 22 is provided with an opening 221, and the battery cell 20 further includes an end cover 21, the end cover 21 being disposed to cover the opening 221, where an exposed gap 25 is provided between the insulating protective layer 24 and the end cover 21.

It can be understood that the end cover 21 can cover the opening 221 of the case 22 and encloses a sealed internal environment with the case 22, where the formed internal environment can be used to accommodate the electrode assembly 23, electrolyte solution, and other components.

Specifically, the connection method between the end cover 21 and the case 22 may be that the end cover 21 fixedly covers the opening 221 of the case 22 through welding, or the end cover 21 may also be fixedly connected to the case 22 and cover the opening 221 through bonding, threaded connection, snap-fit connection, or other methods.

The aforementioned exposed gap 25 refers to a region of the case 22 where the insulating protective layer 24 is not disposed. Specifically, it may be a gap between the insulating protective layer 24 and the end cover 21, that is, a gap between an end surface at one side of the insulating protective layer 24 facing the end cover 21 and a surface at one side of the end cover 21 facing the insulating protective layer 24.

It can be understood that a portion of the insulating protective layer 24 may form the exposed gap 25 with the end cover 21, while another portion of the insulating protective layer 24 may contact the end cover 21; or, the entire insulating protective layer 24 may form the exposed gap 25 with the end cover 21, that is, a distance from any point on the end surface at one side of the insulating protective layer 24 facing the end cover 21 to the surface at one side of the end cover 21 facing the insulating protective layer 24 is greater than 0.

With such a configuration, by providing the exposed gap 25, a portion of the case 22 at the opening 221 is exposed through the exposed gap 25 from the insulating protective layer 24, so as to ensure sufficient operational space when fixedly connecting the end cover 21 and the case 22 through welding or other methods, thereby reducing influence of the insulating protective layer 24 on connection operations between the end cover 21 and the case 22.

According to some embodiments of the present application, continuing to refer to FIGS. 3 to 5, the battery cell 20 further includes a lower plastic layer 26, the lower plastic layer 26 being disposed on an inner wall of the end cover 21, where the lower plastic layer 26 being configured to cover at least a portion of the exposed gap 25.

The lower plastic layer 26 is configured to be disposed on the inner wall of the end cover 21 and to provide insulating protection for the inner wall of the end cover 21. The lower plastic layer 26 may be fixed to the inner wall of the end cover 21 through adhesion. It can be understood that the inner wall of the end cover 21 refers to a wall surface of the end cover 21 facing the case 22.

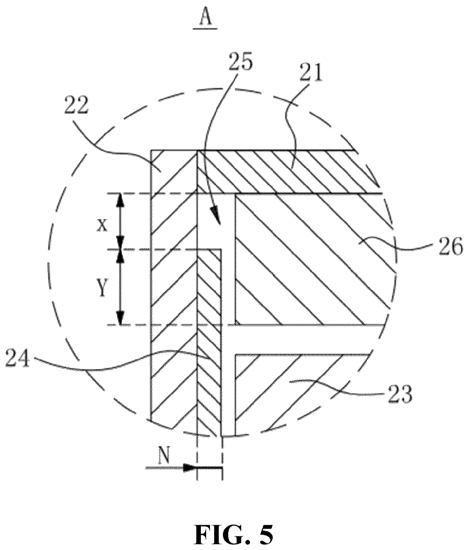

It can be understood that when the end cover 21 covers the opening 221 of the case 22, the lower plastic layer 26 on the inner wall of the end cover 21 will extend into the interior of the case 22. Simultaneously, since the exposed gap 25 is provided between the insulating coating disposed on the inner wall of the case 22 and the end cover 21, the lower plastic layer 26 may cover at least a portion of the exposed gap 25. For example, the lower plastic layer 26 may cover a portion of the exposed gap 25, or the lower plastic layer 26 may completely cover the exposed gap 25, and the lower plastic layer 26 may overlap with the insulating protective layer 24, as specifically shown in FIG. 5.

The lower plastic layer 26 covering the exposed gap 25 means that at least a portion of the lower plastic layer 26 can extend into the region of the exposed gap 25. The lower plastic layer 26 may be spaced apart from the inner wall of the case 22, or the lower plastic layer 26 may abut against the inner wall of the case 22.

In cases where the lower plastic layer 26 completely covers the exposed gap 25 and overlaps with the insulating protective layer 24, the lower plastic layer 26 may abut against the insulating protective layer 24, or the lower plastic may be spaced apart from the insulating protective layer 24.

With such a configuration, the lower plastic layer 26 can cover at least a portion of the exposed gap 25 to reduce the probability of contact between the exposed inner wall of the case 22 at the exposed gap 25 and the electrolyte solution, thereby further reducing the probability of corrosion breakdown of the case 22. While reducing influence of the insulating protective layer 24 on the fixed connection between the end cover 21 and the case 22 through the exposed gap 25, this configuration can also effectively lower the probability of corrosion breakdown caused by contact between the case 22 and the electrolyte solution, and reduce the risk of short circuits caused by contact between the exposed portion of the case 22 at the exposed gap 25 and the electrode assembly 23.

According to some embodiments of the present application, continuing to refer to FIGS. 3 to 5, the battery cell 20 has a height direction H, the end cover 21 being disposed at a top portion of the case 22 along the height direction H, where in any plane parallel to the height direction H, an orthographic projection of the lower plastic layer 26 and an orthographic projection of the insulating protective layer 24 at least partially overlap.

It can be understood that the height direction H of the battery cell 20 refers to a direction from the case 22 toward the end cover 21. As shown in FIG. 4, the height direction H of the battery cell 20 is the H direction indicated in the figure.

It can be understood that the opening 221 of the case 22 is located at the top portion of the case 22 along the height direction H. Accordingly, the end cover 21 is correspondingly disposed at the top portion of the case 22 along the height direction H to cover the opening 221. Simultaneously, the exposed gap 25 between the insulating protective layer 24 and the end cover 21 is a height difference between a top portion of the insulating protective layer 24 along the height direction H and the inner wall of the end cover 21. Therefore, in any plane parallel to the height direction H, the orthographic projection of the lower plastic layer 26 and the orthographic projection of the insulating protective layer 24 at least partially overlap, meaning that the lower plastic layer 26 and the insulating protective layer 24 have an overlapping portion along the height direction H of the case 22. The lower plastic layer 26 and the insulating protective layer 24 can jointly protect the inner wall of the case 22, which effectively improves the insulating protection effect of the inner wall of the case 22, thereby reducing the probability of corrosion breakdown or high-voltage breakdown of the case 22.

According to some embodiments of the present application, continuing to refer to FIGS. 4 and 5, in any plane parallel to the height direction H, a height of an overlapping portion between the orthographic projection of the lower plastic layer 26 and the orthographic projection of the insulating protective layer 24 is Y, where 0 < Y ≤ 10 millimeters (hereinafter, "mm" is used in place of millimeter).

Specifically, Y represents the height of the overlapping portion between the orthographic projection of the lower plastic layer 26 and the orthographic projection of the insulating protective layer 24 in the height direction H. The range of Y is set to be greater than 0, meaning that the lower plastic layer 26 and the insulating protective layer 24 have overlapping portions in the height direction H. The insulating protective layer 24 can provide insulating protection for the inner wall of the case 22, and the exposed gap 25 is formed between the insulating protective layer 24 and the end cover 21 to expose a portion of the case 22, thereby reducing the influence of the insulating protective layer 24 during fixed connection between the case 22 and the end cover 21. Simultaneously, the lower plastic layer 26 on the end cover 21 can cover the exposed gap 25 and extend along the height direction H of the battery cell 20 to overlap with the insulating protective layer 24. This enables the insulating protective layer 24 to provide insulating protection for the case 22 without affecting the connection between the case 22 and the end cover 21, and the lower plastic layer 26 can also protect the exposed portion of the case 22 at the exposed gap 25, thereby reducing the risk of short circuits caused by contact between the case 22 and the electrolyte solution or electrode assembly 23.

Simultaneously, the range of Y is set to be less than or equal to 10 mm, which, on the basis that the lower plastic layer 26 and the insulating protective layer 24 have overlapping portions in the height direction H, limits the height Y of the overlapping portion to be less than or equal to 10 mm, thereby reducing the influence of the lower plastic layer 26 on the electrode assembly 23 accommodated inside the case 22, and reducing the probability of interference between the lower plastic layer 26 and the electrode assembly 23.

With such a configuration, the overlapping height Y between the orthographic projection of the lower plastic layer 26 and the orthographic projection of the insulating protective layer 24 is set to be greater than 0 mm and less than or equal to 10 mm, which can enable partial overlapping arrangement of the lower plastic layer 26 and the insulating protective layer 24 so as to cover the inner wall of the case 22, and to separate the inner wall of the case 22 from the electrolyte solution inside, thereby reducing the probability of contact between the case 22 and the electrolyte solution, and consequently lowering the probability of corrosion breakdown of the case 22, while also reducing the risk of short circuits caused by contact between the inner wall of the case 22 and the electrode assembly 23.

According to some embodiments of the present application, continuing to refer to FIGS. 4 and 5, a height of an overlapping portion between the orthographic projection of the lower plastic layer 26 and the orthographic projection of the insulating protective layer 24 is Y, where 1 mm ≤ Y ≤ 5 mm.

It can be understood that, to enhance the protection effect of the lower plastic layer 26 and the insulating protective layer 24 on the case 22 and further reduce influence of the lower plastic layer 26 on the electrode assembly 23, the overlapping height Y between the orthographic projection of the lower plastic layer 26 and the orthographic projection of the insulating protective layer 24 is set to be greater than or equal to 1 mm and less than or equal to 5 mm, thereby ensuring sufficient overlap between the lower plastic layer 26 and the insulating protective layer 24 in the height direction H of the battery cell 20.

According to some embodiments of the present application, continuing to refer to FIGS. 3 to 5, a height of the exposed gap 25 is X, where 2 mm ≤ X ≤ 10 mm.

It can be understood that the height X of the exposed gap 25 refers to the distance in the height direction H of the battery cell 20 between the top portion of the insulating protective layer 24 and the surface at one side of the end cover 21 facing the insulating protective layer 24. The height X of the exposed gap 25 is set to be greater than or equal to 2 mm to ensure that the case 22 can be exposed from the insulating protective layer 24 over a height range of at least 2 mm, thereby improving the fixed connection (e.g., welding) operation between the end cover 21 and the case 22. Simultaneously, the height X of the exposed gap 25 is set to be less than or equal to 10 mm to optimize the exposure degree of the case 22 from the insulating protective layer 24, thereby enhancing the insulating protection effect of the insulating protective layer 24 on the case 22.

With such a configuration, the height of the exposed gap 25 is set to be greater than or equal to 2 mm and less than or equal to 10 mm, which can enable normal welding fixation of the end cover 21 to the opening 221 of the case 22 within the height range of the exposed gap 25, thereby reducing influence of the insulating protective layer 24 on the assembly of the end cover 21. Additionally, the insulating protective layer 24 can function to provide relatively good insulating protection for the case 22.

According to some embodiments of the present application, continuing to refer to FIGS. 4 and 5, in some embodiments, the height of the exposed gap 25 is X, where 3 mm ≤ X ≤ 5 mm.

It can be understood that, to further improve the fixed connection operation between the end cover 21 and the case 22 and to further optimize the insulating protection effect of the insulating protective layer 24 on the case 22, the height of the exposed gap 25 can be set to be greater than or equal to 3 mm and less than or equal to 5 mm, thereby enabling the insulating protective layer 24 to provide relatively good insulating protection for the case 22 while ensuring normal fixed connection operations between the end cover 21 and the case 22.

According to some embodiments of the present application, continuing to refer to FIGS. 4 and 5, the insulating protective layer 24 includes at least one of phenolic resin, polyimide, polybenzimidazole, and polyetheretherketone.

It can be understood that the insulating protective layer 24 may include one of phenolic resin, polyimide, polybenzimidazole, and polyetheretherketone; alternatively, the insulating protective layer 24 may further include multiple of phenolic resin, polyimide, polybenzimidazole, and polyetheretherketone.

With such a configuration, the insulating protective layer 24 may include at least one of phenolic resin, polyimide, polybenzimidazole, and polyetheretherketone, and the insulating protective layer 24 formed using the aforementioned materials exhibits relatively good insulating protection performance.

According to some embodiments of the present application, continuing to refer to FIGS. 4 and 5, a thickness of the insulating protective layer 24 is N, 1 micrometer ≤ N ≤ 1000 micrometers (hereinafter, "µm" is used in place of micrometer).

Specifically, the thickness N of the insulating protective layer 24 is set to be greater than or equal to 1 µm to ensure that the insulating protective layer 24 has sufficient thickness to improve the insulating protection performance of the insulating protective layer 24; at the same time, the thickness N of the insulating protective layer 24 is set to be less than or equal to 1000 µm, which, while ensuring the insulating protection performance, controls the thickness N of the insulating protective layer 24 not to exceed 1000 µm to reduce the space occupied by the insulating protective layer 24 within the shell 22.

With such a configuration, the thickness of the insulating protective layer 24 is set to be greater than or equal to 1 µm and less than 1000 µm, thereby enabling the insulating protective layer 24 to have a certain thickness and to function to separate the case 22 from the electrolyte solution, such that the insulating protective layer 24 can reduce the probability of contact between the electrolyte solution and the electrolyte solution, so as to lower the probability of corrosion breakdown of the case 22.

According to some embodiments of the present application, continuing to refer to FIGS. 3 to 5, the thickness of the insulating protective layer 24 is N, where 50 µm ≤ N ≤ 500 µm.

It can be understood that, to further optimize the insulation performance of the insulating protective layer 24, the thickness N of the insulating protective layer 24 is set to be greater than or equal to 50 µm; at the same time, to further optimize a space occupancy rate of the insulating protective layer 24, the thickness N of the insulating protective layer 24 is set to be less than or equal to 500 µm, which enables the insulating protective layer 24 to exhibit relatively good insulating protection performance while maintaining a relatively low space occupancy rate of the insulating protective layer 24.

According to some embodiments of the present application, continuing to refer to FIGS. 3 to 5, the battery cell 20 further includes an electrode assembly 23, the electrode assembly 23 being accommodated inside the case 22.

It can be understood that, by arranging the insulating protective layer 24 on the inner wall of the case 22, under the condition that the insulating protective layer 24 can separate the case 22 from the electrolyte solution accommodated inside the case 22, the insulating protective layer 24 can also increase the creepage between the electrode assembly 23 and the case 22 to meet insulation requirements between the electrode assembly 23 and the case 22. Consequently, insulation structures on the surface of the electrode assembly 23 can be eliminated, meaning that there is no need to re-envelope the surface of the electrode assembly 23 with insulation films or other insulation structures, thereby achieving the objective of cost reduction.

By way of example, in some specific implementations, the battery cell 20 includes the case 22 and the end cover 21. An inner wall of the case 22 is coated with an insulating protective coating, and an inner wall of the end cover 21 is attached with the lower plastic layer 26. Along the height direction H of the battery cell 20, a top portion of the case 22 is formed with the opening 221, and the end cover 21 covers the opening 221 and fixedly connected to the case 22 through welding. The insulating protective coating forms the exposed gap 25 with the end cover 21 in the height direction H, enabling the case 22 to be exposed through the exposed gap 25. Simultaneously, the lower plastic layer 26 can cover the exposed gap 25, and the lower plastic layer 26 can have an overlap with the insulating protective coating in the height direction H, such that the insulating protective coating can provide insulating protection for the case 22 while reducing influence on welding between the case 22 and the end cover 21 through the exposed gap 25. Additionally, the lower plastic layer 26 can cover the exposed gap 25, meaning that it protects the exposed portion of the case 22 at the exposed gap 25, thereby reducing the probability of open circuits caused by contact between the electrode assembly 23 (e.g., bare battery cell, current collector tabs) accommodated inside the case 22 and the case 22.

According to some embodiments of the present application, continuing to refer to FIGS. 2 to 5, an embodiment of the present application further provides a battery 100, including the aforementioned battery cell 20. The battery 100 adopts any battery cell 20 described in the foregoing embodiments, which will not be repeated herein.

According to some embodiments of the present application, continuing to refer to FIGS. 1 to 5, an embodiment of the present application further provides an electrical device, including the aforementioned battery cell 20 or the aforementioned battery 100. The electrical device may be any electrical device described in the foregoing embodiments, for example, a vehicle 1000, which will not be repeated herein.

The foregoing descriptions are merely preferred embodiments of the present application, but are not intended to limit present application. Any modification, equivalent replacement, or improvement made within the spirit and principle of present application shall fall within the protection scope of the present application.

## Claims

1. A battery cell, comprising:
a case; and
an insulating protective layer, the insulating protective layer being disposed on an inner wall of the case.

2. The battery cell according to claim 1, wherein: the case is provided with an opening, and the battery cell further comprises an end cover, the end cover being disposed to cover the opening, where an exposed gap is provided between the insulating protective layer and the end cover.

3. The battery cell according to claim 2, wherein: the battery cell further comprises a lower plastic layer, the lower plastic layer being disposed on an inner wall of the end cover, wherein the lower plastic layer is configured to cover at least a portion of the exposed gap.

4. The battery cell according to claim 3, wherein: the battery cell has a height direction, the end cover being disposed at a top portion of the case along the height direction, wherein in any plane parallel to the height direction, an orthographic projection of the lower plastic layer and an orthographic projection of the insulating protective layer at least partially overlap.

5. The battery cell according to claim 4, wherein: in any plane parallel to the height direction, a height of an overlapping portion between the orthographic projection of the lower plastic layer and the orthographic projection of the insulating protective layer is Y, wherein 0 < Y ≤ 10 mm.

6. The battery cell according to claim 4, wherein: a height of an overlapping portion between the orthographic projection of the lower plastic layer and the orthographic projection of the insulating protective layer is Y, wherein 1 mm ≤ Y ≤ 5 mm.

7. The battery cell according to any one of claims 2 to 6, wherein: a height of the exposed gap is X, wherein 2 mm ≤ X ≤ 10 mm.

8. The battery cell according to claim 7, wherein: the height of the exposed gap is X, wherein 3 mm ≤ X ≤ 5 mm.

9. The battery cell according to any one of claims 1 to 8, wherein: the insulating protective layer comprises at least one of phenolic resin, polyimide, polybenzimidazole, and polyetheretherketone.

10. The battery cell according to any one of claims 1 to 9, wherein: a thickness of the insulating protective layer is N, wherein 1 µm ≤ N ≤ 1000 µm.

11. The battery cell according to claim 10, wherein: the thickness of the insulating protective layer is N, wherein 50 µm ≤ N ≤ 500 µm.

12. The battery cell according to any one of claims 1 to 11, further comprising: an electrode assembly, the electrode assembly being accommodated inside the case.

13. A battery comprising: the battery cell according to any one of claims 1 to 12.

14. An electrical device, comprising: the battery cell according to any one of claims 1 to 12 or the battery according to claim 13.
